**Europäisches Patentamt**

**European Patent Office**

**Office européen des brevets**

(19)

(11) Publication number: **0 006 020**
**B1**

(12) **EUROPEAN PATENT SPECIFICATION**

(45) Date of publication of patent specification: **23.02.83**

(51) Int. Cl.³: **C 08 C 19/14**

(21) Application number: **79301028.1**

(22) Date of filing: **31.05.79**

(54) Brominated rubbers and preparation thereof.

(30) Priority: **31.05.78 JP 64308/78**
**11.04.79 JP 43113/79**

(43) Date of publication of application:
**12.12.79 Bulletin 79/25**

(45) Publication of the grant of the patent:
**23.02.83 Bulletin 83/8**

(84) Designated Contracting States:
**DE FR GB IT**

(56) References cited:
**FR - A - 2 209 780**
**GB - A - 476 269**

(73) Proprietor: **JAPAN SYNTHETIC RUBBER CO., LTD.**
**11-24, Tsukiji-2-chome Chuo-ku**
**Tokyo (JP)**

(72) Inventor: **Ikeda, Hiroharu**
**13-6, Narusedai-4-chome**
**Machida-shi (JP)**
Inventor: **Shimozato, Yasuyuki**
**29, Aobadai-2-chome Midori-ku**
**Yokohama (JP)**
Inventor: **Goto, Kohei**
**29, Aobadai-2-chome Midori-ku**
**Yokohama (JP)**

(74) Representative: **Ruffles, Graham Keith et al,**
**MARKS & CLERK 57-60 Lincoln's Inn Fields**
**London WC2A 3LS (GB)**

Courier Press, Leamington Spa, England

# Brominated rubbers and preparation thereof

This invention relates to brominated rubbers.

More particularly, this invention relates to brominated rubbers good in processability and capable of providing a vulcanized rubber having a high modulus of elasticity.

Recently, the need has arisen in specific fields for a general purpose vulcanized rubber that has a higher modulus of elasticity (having for example, 100% modulus which is 1.5 to 2 times or more that of the conventional vulcanized rubbers). Of course, it is desirable that the high modulus vulcanized rubber is otherwise comparable to conventional vulcanized rubbers in its properties, and that the rubber compound has good processability.

It is disclosed in Japanese Patent Application Kokai (Laid-Open) No. 130882/1975 that a brominated rubber produced by adding 1.5 to 30% by weight of bromine to a styrene-butadiene rubber in solution in an organic solvent can be vulcanized with sulphur and magnesium oxide and that the resulting vulcanized rubber has good properties. However, the vulcanizate of this brominated rubber has not so high a modulus of elasticity as to satisfy the recent requirements.

On the other hand, as a process for the bromination of a rubber, it is disclosed in Japanese Patent Application Kokai (Laid-Open) No. 25592/1976 that a flame-retardant moulding material can be obtained by coagulating a butadiene-styrene latex to give a powdery copolymer, dispersing the latter in water or methanol with an emulsifier and high-brominating the resulting dispersion. However, such a high degree of bromination comes to yield a resinous substance, and the vulcanization thereof cannot result in a rubbery vulcanizate having a high modulus of elasticity.

Furthermore, GB Patent Specification No. 476 269 (published 1937) describes a process for the preparation of brominated rubbers by addition of bromine water or equivalent reagent system to a natural or artificial latex. A coagulum forms during the reaction which is separated for mixing with compounding ingredients. Decreased inflammability of the vulcanised material is one of the mentioned advantages.

GB Patent Specification No. 1 051 944 (published 1966) is specifically concerned with flame retardants and discloses the bromination of a diene oligomer or polymer dispersed in an aqueous medium containing a water-soluble cellulose derivative. It is to be noted that only low molecular weight polymers are treated, such polymers typically being liquids and not being conventional rubbers.

French Patent Specification No. 2 209 780 (published 1974) is also concerned with flame retardant products, and describes bromination of a latex with a bromine emulsion to give a resinous product suited for back-sizing carpets.

The present inventors have conducted extensive research with the aim of obtaining a vulcanized rubber having a high modulus of elasticity and a good processability and, as a result, have surprisingly found that a brominated rubber obtained by brominating a conjugated diene-aromatic vinyl elastomeric copolymer in the latex while keeping the uniformity of the latex until the amount of bromine combined with the copolymer reaches 0.5—15% by weight is typically good in processability and can provide a vulcanized rubber having a high modulus of elasticity.

According to this invention, there is provided a brominated rubber obtained by brominating an elastomeric copolymer composed of 50% by weight or more of a $C_4$ or $C_5$ conjugated diene and 50% by weight or less of an aromatic vinyl compound. The copolymer is brominated as a latex while keeping the uniformity of the latex. The amount of bromine combined with the copolymer is 0.5 to 15% by weight, and the brominated rubber contains 3 to 80% by weight of a toluene-insoluble fraction formed by the bromination. Such a brominated rubber is good in processability, high in green strength and can provide a vulcanized rubber having a high modulus of elasticity and a high tensile strength.

The present rubbers can be prepared by a method provided by the invention. The method comprises brominating as a latex an elastomeric copolymer composed of 50% by weight or more of a $C_4$ or $C_5$ conjugated diene and 50% by weight of less of an aromatic vinyl compound until the amount of bromine combined with the rubber is 0.5 to 15% by weight and the rubber contains 3 to 80% by weight of toluene insolubles, the bromination being performed in such a way that appreciable coagulation of the latex does not occur during the bromination.

In order to obtain the brominated rubber of this invention, it is necessary to brominate the elastomeric copolymer in the latex until the amount of bromine combined with the copolymer reaches 0.5 to 15% by weight. It is also necessary to keep the uniformity of latex during the bromination, i.e. the latex must not coagulate to a substantial extent during the bromination.

By these procedures, the resulting brominated rubber comes to contain 3 to 80% by weight of a toluene-insoluble fraction formed by the bromination which fraction seems to contribute to the improvement of green strength and the improvement of modulus and tensile strength of vulcanizate.

In practice, the deposition of a small amount of a coagulum during the bromination is permitted when a suitable reactor is selected, through the upper limit of the coagulum amount is 25% by weight. The less the amount of the coagulum formed, the better the result; the amount of coagulum is preferably 10% by weight or less, more preferably 5% by weight or less, most preferably 2% by weight or less.

In order to keep the uniformity of the latex, use is made of an emulsifier. The following methods may be employed:

(1) An anionic surfactant is used as the emulsifier and the pH of the system is maintained at 9 or more, preferably 10 or more, more preferably 11 or more, during the bromination.

(2) An anionic surfactant is used as the emulsifier, and a nonionic surfactant is also used as auxiliary emulsifier in an amount of 2 to 15% by weight based on the weight of the elastomeric copolymer, without adjusting the pH of the latex.

(3) An anionic surfactant is used as the emulsifier, a nonionic surfactant is also used as auxiliarily emulsifier, and the latex is made acidic (namely, the pH of the latex is adjusted to less than 7) before the bromination. In this case, the amount of the nonionic surfactant may be less than in the method (2); an amount of 2 to 10% by weight is sufficient.

(4) A cationic surfactant is used as the emulsifier.

(5) A nonionic surfactant is used as the emulsifier.

Of the methods (1) to (5), methods (1), (2) and (3) in which a latex formed with an anionic surfactant is used as the starting material are preferred, with methods (1) and (3) the more preferable. The most preferable is method (1).

Emulsion-polymerized SBR latices produced at present on a commercial scale contain an anionic surfactant as an emulsifier, and therefore, when these latices are used in the above-mentioned bromination, it is not necessary to add further anionic surfactant.

The use of a cationic surfactant as in the above method (4) is economically disadvantageous, and the use of a nonionic surfactant alone as in above method (5) makes the coagulation of latex relatively difficult.

The amount of the anionic surfactant used as the emulsifier is normally that which is usually contained in the elastomeric copolymer latex as produced. It is usually 0.5 to 15% by weight based on the weight of the elastomeric copolymer. In methods (4) and (5), the amount of the surfactant as the emulsifier is not critical, and it may be 0.5 to 15% by weight based on the weight of the elastomeric copolymer.

As for the anionic surfactant, there may be used alkali metal salts of higher fatty acids such as potassium oleate, sodium oleate, sodium stearate and the like; rosin acid; salts of disproportionated rosin acid with an alkali metal such as sodium, potassium, and the like, especially with potassium; tall oil soap; alkali metal salts of sulphonic acids such as potassium dodecylbenzenesulphonate, potassium ligninsulphonate and the like; or salts of mono-sulphuric esters of higher alcohols such as the sodium salt of the mono-sulphuric ester of oleyl alcohol. As for the nonionic surfactant, there may be used polyalkylene oxides such as polyoxyethylene cetyl ether, polyoxyethylene lauryl ethjer, polyoxyethylene oleyl ether, and the like; monoesters of higher fatty acids (for example, oleic acid, lauric acid and the like) with polyhydric alcohols such as pentaerythritol and the like; or polyoxyalkylene alkylphenyl ethers such as polyoxyethylene nonyl phenyl ether and the like. As for the cationic surfactant, there may be used quaternary ammonium salts and pyridinium salts having a long chain alkyl group such as dodecyltrimethylammonium chloride, triethanolamine monostearate, the pyridinium salt of N-methylololeamide, or the like. In combination with the abovementioned emulsifiers, there may also be used a dispersing agent such as the sodium salt of a naphthalenesulphonic acid-formaldehyde condensate or the like; or an inorganic salt such as sodium pyrophosphate, potassium chloride or the like.

In order to keep the reaction system at a pH of 9 or more as required in method (1), an alkali is added to the system. The alkali can be an alkali metal hydroxide typified by caustic soda, caustic potash and the like; ammonia; or an aliphatic, alicyclic or aromatic amino compound such as diethylamine, triethylamine, triethanolamine, N-phenylaniline, piperazine, morpholine or the like. Of these alkalis, aqueous solutions of alkali metal hydroxides such as caustic soda, caustic potash and the like are particularly preferable from the viewpoint of ease of handling. If the pH value is lower than 9, in method (1), coagulation occurs to a marked extent and the tensile properties of the resulting brominated rubber cannot be improved. A large amount of alkali may be added at once at the start so that a pH value of 9 or more can be maintained till the completion of the bromination, or alternatively, the alkali may be added in small portions successively throughout the bromination reaction. It is preferable to keep the pH value at 11 or more, that is, to maintain the system strongly alkaline, because the green strength of the resulting brominated rubber, and the heat stability and tensile strength of vulcanizate are enhanced.

The brominated rubber obtained by the present bromination reaction contains 3 to 80% by weight of a toluene-insoluble fraction formed by the bromination. The amount of the toluene-insoluble fraction is suitably determined by adding approximately 1 g of a finely chipped brominated rubber sample to 50 ml of toluene, allowing it to stand at room temperature for 24 hours, then filtering it with a wire gauze of 200 mesh, drying it under reduced pressure at 50°C for 24 hours and then weighing the rubber remaining on the gauze. A toluene-insolubles content of less than 3% is insufficient to retain a high modulus of elasticity, while one of more than 80% adversely affects the processability of the brominated rubber.

The elastomeric copolymer of a $C_4$ or $C_5$ conjugated diene and an aromatic vinyl compound used in this invention contains the conjugated diene in an amount of 50% by weight or more, preferably 60%

3

0 006 020

by weight or more. The copolymer is usually obtained by emulsion polymerization or solution polymerization. As for the $C_4$ or $C_5$ conjugated diene, there may be used butadiene, isoprene, 1,3-pentadiene and their mixtures. As for the aromatic vinyl compound, there may be used styrene, $\alpha$-methylstyrene, vinyltoluene and the like, among which styrene is preferable. Preferred examples of the copolymer rubber are styrene-butadiene rubber, styrene-isoprene rubber, styrene-butadiene-isoprene rubber, styrene-butadiene-1,3-pentadiene rubber and the like.

The latex of the elastomeric copolymer used in this invention may be a latex of an aromatic vinyl-conjugated diene copolymer rubber in which the rubber is dispersed in water by the action of an emulsifier. When, for example, a styrene-butadiene copolymer rubber is produced by emulsion polymerization, unreacted monomer is removed from the emulsion after the termination of the polymerization by steam-stripping. The resulting styrene-butadiene copolymer rubber latex may be used in this invention. Furthermore, a latex of the styrene-butadiene copolymer rubber obtained by adding a solution of the copolymer rubber in an organic solvent to water containing an emulsifier with stirring and then removing the solvent may also be used in this invention.

Bromine is used as the brominating agent in the bromination reaction of this invention. In the reaction, one can use bromine generated *in situ* from an aqueous acidic solution of potassium bromide-potassium bromate, a saturated aqueous bromine solution obtained by dissolving bromine itself in water containing potassium bromide, a complex compound of bromine such as dioxane dibromide, or the like bromine source.

The temperature of the bromination reaction is typically 0° to 100°C, and preferably 10° to 90°C. The reaction is usually carried out by adding the brominating agent to the latex of the aromatic vinyl-conjugated diene elastomeric copolymer with stirring.

The brominated rubber produced by the bromination may be recovered by depositing the rubber as a coagulated, clammy product by a conventional coagulation process, for example, by pouring the latex in to an excess of methanol, by coagulating the latex by addition of a salt such as calcium chloride, aluminium sulphate, magnesium sulphate or the like, or by coagulating the latex by first adding a salt such as sodium chloride or a polymeric coagulant such as glue, polyamine or the like to the latex, thereby creaming it, and adding thereto an acid such as sulphuric acid, hydrochloric acid, acetic acid, oxalic acid or the like, or by a combination of these methods. The recovered rubber is then washed and dried to obtain a solid rubber. The physical properties mentioned herein refer to those of the rubber obtained by removing the coagulum formed in the bromination from the brominated latex and then coagulating the resulting latex.

It is important that the bromine content of the brominated rubber is limited to a range of 0.5 to 15% by weight, preferably 1 to 10% by weight. Usually, the toluene-insoluble fraction content varies depending upon the reaction conditions and the larger the bromine content in the copolymer, the larger the toluene-insoluble fraction content. When the bromine content is 0.5 to 15% by weight, the copolymer usually contains 3 to 80% by weight of the toluene-insoluble fraction. If the bromine content is less than 0.5% by weight, a high modulus of elasticity cannot be obtained though the processability is good. If the bromine content is more than 15% by weight, the processability is not satisfactory though the modulus of elasticity is sufficiently high. When the bromine content is in the range of 1 to 10% by weight, the amount of toluene-insoluble fraction is usually 5 to 50% by weight. The bromine content can be controlled by varying the amount of brominating agent added to the brominating reaction system.

The conventional additives usually used in rubbers can be incorporated into the brominated rubbers of this invention. Such additives include reinforcing agents, fillers, vulcanizing ingredients, softening agents, processing aids, antioxidants and the like. As reinforcing agents, there may be used reinforcing carbon black for rubber, and the like. Suitable vulcanizing ingredients include vulcanizing agents such as inorganic sulphurs; organic sulphur-containing compounds, for example, thiuram polysulphide, morpholine disulphide and the like; organic peroxides, and the like; vulcanizing aids such as zinc oxide, litharge, cadmium oxide, carbonates (for example, magnesium carbonate, zinc carbonate and the like), higher fatty acid salts (for example, zinc stearate, zinc oleate and the like), higher fatty acids (for example, stearic acid, oleic acid, lauric acid and the like), ethanolamine and the like; and vulcanization accelerators such as dithiocarbamates, thirurams, xanthogenic acid derivatives, thiazoles, sulphenamides, thioureas, guanidines, aldehydeamines, amines and the like. These vulcanizing ingredients may be used in any appropriate combination. As softening agent, aromatic oil, napthenic oil and the like may be used.

The additives can be compounded with the brominated rubber by means of rollers, a Banbury mixer or the like. It is also possible to produce an oil-extended rubber by adding an aromatic, napthenic or aliphatic oil in any step after the completion of the bromination reaction and before the coagulation and drying.

The resulting rubber compound is vulcanized usually at a temperature of 100° to 180° for a period of 5 to 120 minutes, whereby a vulcanized rubber having a high modulus of elasticity is obtained.

The typical brominated rubber of this invention has a high green strength, tends to have a lower compound Mooney viscosity, and has a good processability. Usually, its vulcanizate has a 50% modulus

4

of 20 kg/cm² or more or a 100% modulus of 40 kg/cm² or more with a low temperature dependency, and has a tensile strength at break of 130 kg/cm² or more and an elongation at break at 80% or more, all at room temperature. Accordingly, the typical brominated rubber of this invention is useful for rubber articles requiring a high modulus of elasticity, such as tires, especially for the bead and tread, industrial belts, rubber vibration insulators and the like.

It is allowable to incorporate in to the present brominated rubbers other vulcanizable rubbers such as natural rubber (NR), polyisoprene rubber (IR), polybutadiene rubber (BR), styrene-butadiene rubber (SBR), acrylonitrile-butadiene rubber (NBR), chloroprene rubber (CR), ethylene-propylene-diene rubber (EPDM), isobutylene-isoprene rubber (IIR) and the like, particularly natural rubber, polyisoprene rubber, polybutadiene rubber or styrene-butadiene rubber. The brominated rubber of this invention can be blended with the above-mentioned vulcanizable rubbers in order to improve their green strength or to improve the modulus of their vulcanizates.

The present invention is illustrated by the following non-limiting Examples. Comparative Examples are also given.

The Mooney viscosities were measured at 100°C with rotor S or L. The measurements obtained with rotor L are approximately equal to 1.9 times the measurements obtained with rotor S.

Tensile testing was carried out according to the method of JIS K-6301.

The bromine contents of the brominated rubbers were quantitatively analyzed by a flask combustion method according to JIS K-5580.

The processability of the rubbers was evaluated by observing the behaviour of the rubber in rolling, namely by observing the tendency to form a tight band around the roller and the surface state of rubber band around the roller.

The rubber latices A to G used in the following Examples and Comparative Examples were synthesized by an emulsion polymerization process with the conventional sulphoxylate recipe. In each instance, the polymerization temperature was 5°C, and when the polymerization conversion reached 60 to 70%, the polymerization was terminated and unreacted monomer was removed by steam stripping or distillation under reduced pressure. Table 1 shows for each of the lattices A to H the monomer composition after polymerization, the kind and concentration of emulsifier, and some properties of the resulting polymer.

TABLE 1

| | Latex A | Latex B | Latex C | Latex D | Latex E | Latex F | Latex G |
|---|---|---|---|---|---|---|---|
| Monomer (% by wt.)[*1] | | | | | | | |
| Styrene | 23.5 | 23.5 | 46 | 19 | 24 | 23 | 25 |
| Butadiene | 76.5 | 76.5 | 54 | — | 76 | 77 | 75 |
| Isoprene | — | — | — | 81 | — | — | — |
| Emulsifier used for polymerization | Potassium salt of disproportionated rosin acid | Potassium salt of disproportionated rosin acid | Potassium salt of disproportionated rosin acid | Potassium salt of disproportionated rosin acid | Sodium dodecyl-benzene-sulphonate | Polyoxyethylene nonylphenyl ether (HLB 14.4) | Dodecyltrimethyl-ammonium chloride |
| Concentration of emulsifier (% by wt. based on rubber) | 7.0 | 7.0 | 7.0 | 7.0 | 7.0 | 7.0 | 7.0 |
| Solids content (%) | 24 | 24 | 22 | 25 | 22 | 21 | 20 |
| Mooney viscosity $ML_{1+4}^{100°C}$ of raw rubber | 31[*2] | 58[*2] | 48 | 48 | 90 | 30 | 54 |

Notes:
[*1] Polymer composition after polymerization analyzed by a refractive index method, except that the polymer composition of Latex D was analyzed by IR spectroscopy.

[*2] $MS_{1+4}^{100°C}$

## 0 006 020

For the bromination of the rubber latices in the Examples and Comparative Examples, an aqueous bromine solution obtained by dissolving 31 parts by weight of bromine and 1 part by weight of potassium bromide in 1,000 parts by weight of water was used, unless otherwise specified.

For the bromination of a rubber solution in certain of the Comparative Examples (e.g. Comparative Example 10), a bromine solution in 750 parts by weight of chloroform was dropped in to a solution of 100 parts by weight of a rubber in 2,400 parts by weight of chloroform, unless otherwise specified.

The amounts of bromine used in the brominations are expressed in parts by weight of bromine contained in the bromine solution per 100 parts by weight of the rubber.

The formulation for the rubber compounds used in the Examples and Comparative Examples was as shown in Table 2 unless otherwise specified.

TABLE 2
Compounding Formulation

| Ingredient | Amount (parts by weight) |
| --- | --- |
| Rubber | 100 |
| ISAF carbon black | 50 |
| High aromatic process oil (JSR AROMA) | 10 |
| Zinc oxide | 5 |
| Stearic acid | 3 |
| Vulcanization accelerator (N-oxydiethylene-2-benzothiazole sulphenamide) | 1.5 |
| Sulphur | 2.5 |

The vulcanization of the rubber was effected by pressing the rubber compound at 145° for 60 minutes.

### Example 1

60 g of a nonionic surfactant (polyoxyethylene nonylphenyl ether (HLB = 14.4) was dissolved as auxiliary emulsifier in 2,000 g of the SBR latex A of Table 1. The saturated aqueous bromine solution was dropped into the latex with stirring at room temperature over a period of 2 hours, and the mixture was then subjected to reaction for an additional 30 minutes. After reaction, the mixture was poured in to an excess of methanol containing a small amount of 2,6-di-$t$-butyl-$p$-cresol, thus coagulating the rubber which was then dried. The brominated rubber thus obtained was compounded on rolls in accordance with the formulation of Table 2 and then vulcanized into a sheet. Subsequently, the tensile properties of the vulcanized rubber were measured. The results obtained were as shown in Table 3$a$.

### Examples 2 to 4 and Comparative Examples 1 and 2

The SBR latex A of Table 1 was brominated by repeating the procedure of Example 1, except that the amount of the saturated aqueous bromine solution was varied. Then, compounding of rubber and vulcanization were carried out in the same manner as in Example 1 and the tensile properties were measured in the same manner as in Example 1. The results obtained were as shown in Table 3$a$. Comparative Example 1 relates to the use of unbrominated SBR latex A while Comparative Example 2 relates to the use of too much bromine, giving too high a level of toluene-insolubles.

### Examples 5 and 5'

Polyoxyethylene nonylphenyl ether (HLB = 14.4) was dissolved as auxiliary emulsifier in the SBR latex A of Table 1 in a proportion of 2% or 2.5% by weight based on the weight of the rubber used, and the pH of the latex was adjusted to 5.74 or 9.72, respectively, with dilute sulphuric acid (2%). Subsequently, the saturated aqueous bromine solution was dropped in to the latex in an amount of 8.1 g bromine, and the resulting mixture was subjected to reaction. The percentage of coagulum was 4.3% and 9.8%, respectively.

When the latex was made acidic before the bromination, the percentage of coagulum was lower, and the amount of the nonionic surfactant could be reduced.

In the same manner as in Example 1, the rubber was recovered, compounded with the additives, and then vulcanized, after which properties of the vulcanizate were measured to obtain the results shown in Table 3$a$.

7

### Examples 6 to 8 and Comparative Examples 3 to 5

Using the SBR latices B, C and D shown in Table 1, the rubber was brominated with the saturated aqueous bromine solution, compounded and vulcanized in the same manner as in Example 1, after which the tensile properties were measured. The results obtained were as shown in Table 3a. Comparative Examples 3 to 5 relate to the use of unbrominated latices.

### Examples 9 to 11 and Comparative Examples 6 to 8

The latices E, F and G shown in Table 1 were used; an alkylbenzenesulphonate anionic surfactant, a nonionic surfactant and a cationic surfactant were used as an emulsifier, respectively.

The same general procedure as in Example 1 was employed to brominate the latex directly with the saturated aqueous bromine solution. The resulting brominated rubber was compounded and vulcanized in the same manner as in Example 1, and the tensile properties were measured. In the course of bromination, in the case of latex E, a coagulum was formed in a quantity corresponding to 3.7% by weight of the total polymer. In the cases of latex F and latex G, no coagulum was formed.

In Comparative Examples 6 to 8, compounding and vulcanization of rubber were carried out in the same manner as in Examples 9 to 11 (except that latices E, F and G were un-brominated), after which the tensile properties were measured. The results obtained were as shown in Table 3b.

### Comparative Example 9

An NR (natural rubber) latex was brominated in the same manner as in Example 1, and the rubber was then compounded and vulcanized in the same manner as in Example 1 to the same formulation as shown in Table 2, except that the vulcanization accelerator was used in an amount of 0.5 part by weight and the vulcanization time was 30 minutes. The results obtained were as shown in Table 3b.

### Comparative Example 10

An NR (natural rubber) latex was coagulated with methanol to separate the rubber. The rubber was dissolved in chloroform to form a solution having a concentration of 4% by weight. While stirring this chloroform solution, the bromine solution in chloroform was dropped thereinto at room temperature to brominate the rubber. Thereafter, the rubber was compounded and vulcanized to the same formulation as shown in Table 2 in the same manner as in Example 1, except that the vulcanization accelerator was used in an amount of 0.5 part by weight and the vulcanization time was 30 minutes and the tensile properties were measured. The results obtained were as shown in Table 3b.

### Comparative Example 11

The procedure of Comparative Example 10 was repeated, except that a latex made from cis-1,4-polyisoprene was used as the starting material in place of the NR latex in Comparative Example 10. The results obtained were as shown in Table 3b.

### Comparative Example 12

The procedure of Example 1 was repeated, except that the latex of Comparative Example 11 was used in place of the SBR latex A, and the formulation and vulcanization conditions were the same as in Comparative Example 11. The results obtained were as shown in Table 3b.

### Comparative Example 13

The procedure of Comparative Example 10 was repeated, except that the SBR latex A shown in Table 1 was used in place of the NR latex, and the recipe and vulcanization conditions were the same as in Example 1. The results obtained were as shown in Table 3b.

### Comparative Example 14

cis-1,4-Polybutadiene was dissolved in chloroform to form a solution having a concentration of 4% by weight and brominated with the bromine solution in chloroform in the same manner as in Comparative Example 10. Thereafter, compounding and vulcanization were carried out with the recipe shown in Table 2 by the same procedure as in Example 1, except that the vulcanization time was 30 minutes. The results obtained were as shown in Table 3b.

TABLE 3a

| E, Example number or CE, Comparative Example number —1— | Kind of rubber —2— | Conditions for bromination | | Bromine content in brominated rubber (% by wt.) —5— | Toluene-insoluble fraction (% by wt.) —6— | Mooney viscosity $MS_{1+4}^{100°c}$ | |
|---|---|---|---|---|---|---|---|
| | | Bromine charged (g/100 g rubber) —3— | State of system —4— | | | Raw —7— | Compound —8— |
| CE 1 | SBR — A | — | — | 0 | 0 | 31 | 34 |
| E 1 | ,, | 9.4 | Latex | 5.0 | 12 | 42 | 39 |
| E 2 | ,, | 13.9 | ,, | 7.7 | 25 | 50 | 46 |
| E 3 | ,, | 16.0 | ,, | 9.6 | 13 | 56 | 51 |
| E 4 | ,, | 23.6 | ,, | 12.1 | 52 | 67 | 58 |
| E 5 | ,, | 8.1 | ,, (pH 5.74) | 4.2 | 20 | 82* | 73* |
| E 5′ | ,, | 8.1 | ,, (pH 9.72) | 3.7 | 17 | 74* | 70* |
| CE 2 | ,, | 38.3 | ,, | 18.8 | 85 | 92 | — |
| CE 3 | SBR — B | — | — | 0 | 0 | 58 | — |
| E 6 | ,, | 10.9 | Latex | 6.3 | 5 | 79 | — |
| CE 4 | SBR — C | — | — | 0 | 0 | 48* | 69* |
| E 7 | ,, | 9.7 | Latex | 4.9 | 10 | 67* | 68* |

Note: * $ML_{1+4}^{100°}$

TABLE 3a (continued)

| E, Example number or CE, Comparative Example number —1— | Green strength (kg/cm²) (room temperature) | | 50% M₅₀, Modulus (kg/cm²) | | 100% M₁₀₀, Modulus (kg/cm²) | | T_B, Tensile strength at break (kg/cm²) | | E_B, Elongation at break (%) | | Processability of rubber at the time of compounding —19— |
|---|---|---|---|---|---|---|---|---|---|---|---|
| | Raw —9— | Compound —10— | 25°C —11— | 120°C —12— | 25°C —13— | 120°C —14— | 25°C —15— | 120°C —16— | 25°C —17— | 120°C —18— | |
| CE 1 | — | 3.5 | 15 | 16 | 28 | 24 | 213 | 60 | 399 | 218 | Good |
| E 1 | — | — | 28 | 18 | 60 | 43 | 213 | 74 | 272 | 156 | Good |
| E 2 | 3.2 | 13.3 | 60 | 29 | 114 | 57 | 218 | 72 | 207 | 122 | Good |
| E 3 | — | — | 93 | 35 | 154 | 73 | 202 | 73 | 148 | 102 | Good |
| E 4 | — | 18.7 | 140 | 50 | — | — | 203 | 76 | 80 | 73 | Good |
| E 5 | — | 8.4 | 32 | 22 | 65 | 39 | 202 | 80 | 284 | 169 | Good |
| E 5' | — | 6.1 | 29 | 19 | 52 | 36 | 200 | 71 | 279 | 165 | Good |
| CE 2 | — | — | — | — | — | — | 225 | — | 20 | — | Poor in attachment to roller |
| CE 3 | 2.8 | 5.1 | 17 | 16 | 32 | 29 | 253 | 83 | 360 | 220 | Good |
| E 6 | 4.6 | 13.7 | 49 | 28 | 104 | 61 | 235 | 78 | 205 | 117 | Good |
| CE 4 | — | 5.7 | 21 | 16 | 42 | 29 | 178 | 75 | 274 | 218 | Good |
| E 7 | — | 10.4 | 43 | 18 | 81 | 36 | 214 | 80 | 231 | 191 | Good |

0 006 020

TABLE 3b

| E, Example number or CE, Comparative Example number —1— | Kind of rubber —2— | Conditions for bromination | | Bromine content in brominated rubber (% by wt.) —5— | Toluene-insoluble fraction (% by wt.) —6— | Mooney viscosity MS$^{100°C}_{1+4}$ | |
|---|---|---|---|---|---|---|---|
| | | Bromine charged (g/100 g rubber) —3— | State of system —4— | | | Raw —7— | Compound —8— |
| CE 5 | SIR — D | — | — | 0 | 0 | 48* | 51* |
| E 8 | " | 11.1 | Latex | 4.8 | 5 | 35* | 48* |
| CE 6 | SBR — E | — | " | 0 | 0.5 | 90* | 107* |
| E 9 | " | 16.9 | " | 8.8 | 65 | — | 85* |
| CE 7 | SBR — F | — | " | 0 | 0 | 30* | 47* |
| E 10 | " | 16.9 | " | 12.5 | 37 | 60* | 87* |
| CE 8 | SBR — G | — | " | 0 | 0 | 54* | 67* |
| E 11 | " | 16.9 | " | 8.5 | 13 | 69* | 73* |
| CE 9 | NR | 10.0 | " | 8.2 | 4 | 55 | 28 |
| CE 10 | NR | 8.7 | Solution | 7.6 | 0 | 38 | 24 |
| CE 11 | IR | 3.1 | Solution | 3.9 | 0 | — | — |
| CE 12 | IR | 11.1 | Latex | 8.0 | 1 | 36 | 33 |
| CE 13 | SBR — A | 8.7 | Solution | 7.4 | 0 | 42 | 40 |
| CE | BR | 6.7 | " | 6.3 | 0 | — | — |

0 006 020

TABLE 3b (continued)

| E, Example number or CE, Comparative Example number —1— | Green strength (kg/cm²) (room temperature) | | 50% M$_{50}$, Modulus (kg/cm²) | | 100% M$_{100}$, Modulus (kg/cm²) | | T$_B$, Tensile strength at break (kg/cm²) | | E$_B$, Elongation at break (%) | | Processability of rubber at the time of compounding —19— |
|---|---|---|---|---|---|---|---|---|---|---|---|
| | Raw —9— | Compound —10— | 25°C —11— | 120°C —12— | 25°C —13— | 120°C —14— | 25°C —15— | 120°C —16— | 25°C —17— | 120°C —18— | |
| CE 5 | — | — | 18 | — | 37 | — | 147 | — | 276 | — | Good |
| E 8 | — | — | 35 | — | 57 | — | 143 | — | 260 | — | Good |
| CE 6 | — | 7.9 | 19 | 16 | 42 | 34 | 256 | 80 | 335 | 188 | Good |
| E 9 | — | 27.1 | 116 | 56 | 179 | — | 213 | 103 | 137 | 98 | Good |
| CE 7 | — | 4.7 | — | — | — | — | — | — | — | — | Good |
| E 10 | — | 25.1 | — | — | — | — | — | — | — | — | Good |
| CE 8 | — | 4.5 | 17 | 14 | 34 | 28 | 211 | 84 | 367 | 246 | Good |
| E 11 | — | 7.6 | 25 | 18 | 51 | 37 | 221 | 87 | 304 | 195 | Good |
| CE 9 | — | — | 22 | — | 26 | — | 58 | — | 497 | — | Good |
| CE 10 | — | — | 20 | — | 26 | — | 81 | — | 470 | — | Good |
| CE 11 | — | — | 9 | — | 16 | — | 64 | — | 315 | — | Poor in attachment to roller |
| CE 12 | — | — | 19 | — | 28 | — | 124 | — | 450 | — | Poor in attachment to roller |
| CE 13 | — | — | 22 | 15 | 45 | 31 | 229 | 78 | 323 | 205 | Good |
| CE | — | — | 13 | 11 | 20 | 19 | 168 | 74 | 503 | 427 | Poor |

### Example 12

A solution of 5.16 g of potassium hydroxide in 50 ml of water was added to 300 g of the SBR latex A shown in Table 1 (solid content 21.8% by weight). A 200 ml saturated aqueous bromine solution containing 6.2 g of bromine was dropped in to the latex with stirring at room temperature over a period of 30 minutes to brominate the rubber. The latex had a pH of 13.8 before addition of the bromine solution and a pH of 12.8 after the addition. After the reaction, no coagulum was observed in the latex. The brominated latex thus obtained was poured into a large excess of methanol containing a small amount of 2,6-di-$t$-butyl-$p$-cresol, thereby to coagulate the brominated rubber which was then recovered. The brominated rubber thus obtained had a bromine content of 1.8% by weight and contained 5% by weight of toluene-insoluble fraction. The following ingredients were added in the following amounts in parts by weight to 100 parts by weight of the rubber thus obtained, and the mixture was compounded on open rolls:

| | |
|---|---|
| ISAF carbon black | 50 |
| High aromatic process oil (JSR AROMA) | 10 |
| Zinc oxide | 5 |
| Stearic acid | 3 |
| Vulcanization accelerator (N-oxydiethylene-2-benzothiazole sulphenamide) | 1.5 |
| Sulphur | 2.5 |

The resulting compound had a good processability. The results obtained and the reaction conditions are summarized in Table 4.

### Comparative Example 15

An experiment was carried out under the same conditions as in Example 12, except that the potassium hydroxide was used in an amount of 0.87 g. The pH was 13.2 before bromination and 8.1 after bromination. As shown in Table 4, the formation of coagulum was remarkable.

### Examples 13 to 15

A brominated SBR was prepared by repeating the procedure of Example 12, except that the amount of the saturated aqueous bromine solution as brominating agent was varied. The brominated SBR thus obtained was compounded with the same ingredients in the same proportion and by the same procedure as in Example 12, and the compound was rolled. The compound thus obtained was vulcanized in the same manner as in Example 12, and the tensile properties of the vulcanizate were measured. The results obtained and the reaction conditions are summarized in Table 4.

### Comparative Example 16

A brominated SBR was prepared by brominating the SBR latex A shown in Table 1 in the same manner as in Example 12, except that no alkali was added. The pH before the bromination was 9.7 and 3.0 after the bromination. As shown in Table 4, a coagulum was produced in a larger amount. The brominated SBR was compounded with the same ingredients in the same proportion as in Example 12, and rolled. The compound was vulcanized by the same procedure as in Example 12, and the tensile properties of the vulcanizate were measured. The results are summarized in Table 4.

### Examples 16 to 19

The nonionic surfactants shown in Table 4 were dissolved in 300 g portions of the SBR latex A shown in Table 1 (solid content: 21.8%) in the proportions as shown in Table 4. The pH of this latex was 9.7 in every case. The latex was brominated in the same manner as in Example 12, except that no alkali was added, and the resulting brominated rubber was compounded and vulcanized in the same manner as in Example 12. Tensile properties of the vulcanizate were measured to obtain the results as shown in Table 4.

TABLE 4

| E, Example Number or CE, Comparative Example Number | Additive | | Bromide charged (g/100 g rubber) | Weight percentages of coagulum formed (%) | pH after reaction | Bromine content in brominated rubber (% by wt.) |
|---|---|---|---|---|---|---|
| | Kind | Amount added (g/100 g rubber) | | | | |
| E 12 | KOH | 7.89 | 8.1 | 0 | 12.8 | 1.8 |
| CE 15 | KOH | 1.33 | 8.1 | 47.5 | 8.1 | 1.1 |
| E 13 | KOH | 13.16 | 16.2 | 0 | 13.2 | 5.1 |
| E 14 | KOH | 7.89 | 16.2 | 0 | 12.5 | 6.3 |
| E 15 | KOH | 7.89 | 40.5 | 0 | 11.7 | 9.3 |
| CE 16 | None | — | 8.1 | 74.0 | 3.0 | 1.1 |
| E 16 | Polyoxyethylene nonylphenyl ether (HLB 14.4) | 3.5 | 10.8 | 7.2 | 2.2 | 4.3 |
| E 17 | Polyethylene glycol mono-oleyl ether (HLB 17.7) | 3.5 | 10.8 | 10.4 | 2.1 | 4.9 |
| E 18 | Polyoxyethylene sorbitan monolaurate (HLB 16.7) | 4.5 | 10.8 | 13.5 | 2.0 | 5.8 |
| E 19 | Polyoxyethylene lauryl ether (HLB 16.3) | 4.0 | 10.8 | 14.5 | 2.2 | 4.5 |

TABLE 4 (continued)

| E, Example Number or CE, Comparative Example Number | Toluene-insoluble fraction (% by wt.) | Compound Mooney viscosity ($ML_{1+4}^{100°C}$) | Green Strength (carbon-filled) (kg/cm²) | Properties of vulcanizate | | | | Process-ability of rubber at the time of com-pounding |
|---|---|---|---|---|---|---|---|---|
| | | | | $M_{50}$ (kg/cm²) 25°C—120°C | $M_{100}$ (kg/cm²) 25°C—120°C | $T_B$ (kg/cm²) 25°C—120°C | $E_B$ (%) 25°C—120°C | |
| E 12 | 5 | 71 | 9.5 | 21—18 (0.82)[*1] | 44—36 | 223—99 (0.44)[*1] | 319—212 | Good |
| CE 15 | 17 | 65 | 3.8 | 25—19 (0.76) | 54—39 | 188—80 (0.43) | 266—176 | Good |
| E 13 | 65 | 88 | 18.1 | 36—27 (0.75) | 83—61 | 245—94 (0.38) | 224—146 | Good |
| E 14 | 42 | 105 | 20.0 | 54—32 (0.59) | 110—72 | 243—100 (0.41) | 201—128 | Good |
| E 15 | 77 | 124 | 27.8 | 105—57 (0.54) | 193— — | 233—101 (0.43) | 119—82 | Good |
| CE 16 | 37 | 72 | 3.7 | 18—16 (0.89) | 37—22 | 210—70 (0.33) | 350—110 | Good |
| E 16 | 26 | 77 | 18.5 | 36—23 (0.64) | 65—40 | 210—82 | 240—160 | Good |
| E 17 | 31 | 74 | 10.1 | 31—20 (0.65) | 62—37 | 208—90 | 310—208 | Good |
| E 18 | 38 | 72 | 10.2 | 32—20 (0.63) | 65—42 | 209—84 | 273—171 | Good |
| E 19 | 40 | 78 | 10.8 | 34—21 (0.62) | 68—45 | 200—78 | 232—153 | Good |

Note: *1 In $M_{50}$ and $T_B$, the figures in parentheses refer to temperature dependency.

As seen from Table 4, the rubber compounds of this invention all have a good processability and a higher green strength than those in the Comparative Examples. Furthermore, the vulcanizates of the rubber compounds have a high modulus and exhibit a high tensile strength at ambient and elevated temperatures.

### Examples 20 to 23

To 500 g of the SBR latex A shown in Table 1 was added a solution of 14.3 g of potassium hydroxide in 50 ml of water to adjust the pH of the latex to 13.5, and 1280 ml of the saturated aqueous bromine solution (bromine content: 39.3 g) was then dropped into the latex over 2 hours, after which the reaction was continued for a further 30 minutes. After the completion of the reaction, the brominated latex was poured into a large amount of methanol containing a small amount of 2.6-di-*t*-butyl-*p*-cresol, thereby coagulating the latex. The brominated copolymer was then recovered.

The bromine content of the brominated copolymer thus obtained was found to be 12.4% by weight.

With 50 parts by weight of the brominated copolymer were compounded 50 parts by weight of natural rubber (NR), isoprene rubber (IR), butadiene rubber (BR) or styrene-butadiene rubber (SBR) and the ingredients shown in Table 5 in the amounts shown in Table 5, and the resulting compound was subjected to vulcanization under the conditions shown in Table 5. Tensile properties of the resulting vulcanizate were measured to obtain the results shown in Table 6.

### Comparative Examples 17 to 19

With 50 parts by weight of the SBR latex A shown in Table 1 were compounded 50 parts by weight of the same NR, IR or BR as in Example 20 to 23 and the ingredients shown in Table 5 in the amounts shown in Table 5, and the resulting compound was vulcanized under the conditions shown in Table 5. The properties of the vulcanizate were as shown in Table 6.

### Comparative Examples 20 to 23

The same NR, IR or BR as in Examples 20 to 22 was compounded alone with the ingredients shown in Table 5 and the resulting compound was vulcanized under the conditions shown in Table 5. The properties of the resulting vulcanizate were as shown in Table 6.

TABLE 5

| | E, Example Number, or CE, Comparative Example Number | | | |
|---|---|---|---|---|
| | E20 and E21 and CE17 and CE18 | E22 and E23 and CE19 and CE20 | CE21 | CE22 and CE23 |
| Ingredient, parts by weight | | | | |
| Rubber mixture | 100 | 100 | 100 | 100 |
| ISAF Carbon black | 50 | 50 | 50 | 50 |
| Process oil (JSR AROMA) | 10 | 10 | 10 | 10 |
| Zinc oxide | 5 | 5 | 5 | 5 |
| Stearic acid | 3 | 3 | 3 | 3 |
| Vulcanization accelerator | | | | |
| N-oxydiethylene-2-benzothiazole sulphenamide | 0 | 1.5 | 1.5 | 0 |
| Dibenzothiazolyl sulphide | 1.1 | 0 | 0 | 0.7 |
| Tetramethylthiuram disulphide | 0.1 | 0 | 0 | 0 |
| Sulphur | 2.5 | 2.5 | 2.5 | 2.5 |
| Vulcanization conditions | | | | |
| Temperature (°C) | 145 | 145 | 145 | 145 |
| Time (min) | 50 | 60 | 30 | 30 |

TABLE 6

| E, Example Number, or CE, Comparative Example Number | Rubber blended | Mooney viscosity of compound ($ML_{1+4}^{100°C}$) | Green strength ($T_{max}$) (kg/cm²) | 50% Modulus (kg/cm²) | | 100% Modulus (kg/cm²) | | Tensile strength at break (kg/cm²) | | Elongation at break (%) | |
|---|---|---|---|---|---|---|---|---|---|---|---|
| | | | | At 25°C | At 120°C | At 25°C | At 120°C | At 25°C | At 120°C | At 25°C | At 120°C |
| E 20 | NR*1 | 67 | 23.5 | 35 | 19 | 66 | 38 | 176 | 71 | 254 | 173 |
| E 21 | IR*1 | 83 | 17.4 | 55 | 33 | 95 | 63 | 169 | 79 | 206 | 129 |
| E 22 | BR*1 | 107 | 17.1 | 44 | 30 | 86 | 62 | 178 | 88 | 211 | 140 |
| E 23 | SBR*1 | 102 | 25.9 | 37 | 21 | 75 | 44 | 218 | 90 | 259 | 169 |
| CE 17 | NR*2 | 42 | 14.7 | 15 | 12 | 29 | 22 | 166 | 89 | 360 | 332 |
| CE 18 | IR*2 | 51 | 4.3 | 14 | 12 | 27 | 21 | 144 | 79 | 359 | 309 |
| CE 19 | BR*2 | 61 | 3.7 | 17 | 16 | 32 | 29 | 152 | 83 | 325 | 247 |
| CE 20 | SBR*2 | 65 | 3.5 | 15 | 15 | 28 | 24 | 213 | 60 | 399 | 218 |
| CE 21 | BR*3 | 67 | 1.7 | 17 | 15 | 29 | 21 | 155 | 73 | 390 | 256 |
| CE 22 | IR*3 | 47 | 3.5 | 12 | 11 | 22 | 18 | 169 | 99 | 435 | 609 |
| CE 23 | NR*3 | 38 | 18.9 | 11 | 9 | 20 | 14 | 145 | 83 | 349 | 647 |

Note:
*1 The rubber was used together with the brominated SBR.
*2 The rubber was used together with the unbrominated SBR.
*3 The rubber was used alone.

From the results in Table 6, it can be seen that the compound of the unbrominated SBR with NR, IR or BR is inferior in green strength, modulus of elasticity and tensile strength to the compound of the brominated SBR with NR, IR or BR, respectively. It can also be seen that the compound free from the copolymer was inferior in tensile properties to the compound containing the brominated copolymer.

Examples 24 to 26 and Comparative Examples 24 and 25

Tests on thermal stability of brominated rubbers

The brominated rubber obtained in Example 14 was used in Example 24.

In Example 25, there was used a brominated rubber (bromine content 6.4% by weight) obtained by repeating the same procedure as in Example 14, except that polyoxymethylene nonylphenyl ether (HLB 14.4) which is a nonionic surfactant was added in an amount of 2.5% by weight based on the weight of the rubber before the bromination and 16.2 parts by weight of bromine was reacted with 100 parts by weight of the rubber.

In Example 26, there was used a brominated rubber (bromine content: 6.9% by weight) obtained by repeating the same procedure as in Example 25, except that no potassium hydroxide was added before the bromination and bromine was used in a proportion of 13.6 parts by weight per 100 parts by weight of the rubber.

About 20 mg of each of the brominated rubbers was heated while elevating the temperature at a rate of 15°C/min by means of a thermo-analyzer, and subjected to thermogravimetric anaylsis to obtain the results shown in Table 7.

For Comparative Example 24 a brominated rubber (bromine content: 6.8% by weight) was prepared by effecting the bromination in solution in the same manner as in Comparative Example 13, except that bromine was used in a proportion of 7.5 g per 100 g of the rubber, and subjected to thermogravimetric analysis as in Examples 24 to 26 to obtain the results shown in Table 7.

For Comparative Example 25, a commercially available chloroprene rubber which is a halogen-containing rubber in everyday use was subjected to thermogravimetric analysis in the same manner as in Examples 24 to 26 to obtain the results shown in Table 7.

TABLE 7

Percentage of residual weight

| | Room temp. | Temperature (°C) | | | | | | |
|---|---|---|---|---|---|---|---|---|
| | | 100 | 200 | 250 | 300 | 350 | 400 | 425 |
| Example 24 | 100 | 100 | 98 | 96 | 93 | 90 | 80 | 50 |
| Example 25 | 100 | 100 | 96 | 94 | 92 | 88 | 80 | 50 |
| Example 26 | 100 | 100 | 94 | 91 | 88 | 82 | 73 | 50 |
| Comparative Example 24 | 100 | 100 | 94 | 90 | 86 | 78 | 65 | 50 |
| Comparative Example 25 | 100 | 100 | 97 | 94 | 86 | 64 | 45 | 40 |

The brominated rubbers used in the Examples 24 to 26 which had been obtained by bromination of the latex exhibit a lower rate of thermal decomposition in the range of 300° to 400°C than the brominated SBR used in the Comparative Example 24 and the commercially available chloroprene rubber used in the Comparative Example 25. It can therefore be seen that the brominated rubbers of the invention are superior in thermal stability to the other rubbers.

## Claims

1. A brominated rubber obtained by brominating a latex characterized in that the brominated rubber contains 3 to 80% by weight of a toluene-insoluble fraction and is obtained by brominating as an aqueous latex an elastomeric copolymer composed of 50% by weight or more of a $C_4$ or $C_5$ conjugated diene and 50% by weight or less of an aromatic vinyl compound while keeping the uniformity of the latex using an emulsifier such that no more than 25% by weight of the latex coagulates, the amount of bromine combined with the rubber being 0.5 to 15% by weight.

2. A brominated rubber according to Claim 1, wherein the elastomeric copolymer is a copolymer

19

of butadiene, isoprene or 1,3-pentadiene with styrene.

3. A brominated rubber according to Claim 2, wherein the elastomeric copolymer is a copolymer composed of 60% by weight or more of butadiene and 40% by weight or less of styrene.

4. A brominated rubber according to Claim 1, 2 or 3, wherein the brominated rubber contains 1 to 10% by weight of bromine.

5. A method of producing a brominated rubber which comprises brominating a latex, characterized in that an aqueous latex of an elastomeric copolymer composed of 50% by weight or more of a $C_4$ or $C_5$ conjugated diene and 50% by weight or less of an aromatic vinyl compound is brominated until the amount of bromine combined with the rubber is 0.5 to 15% by weight and the rubber contains 3 to 80% by weight of toluene insolubles, the bromination being performed in the presence of an emulsifier keeping the uniformity of the latex such that no more than 25% by weight of the latex coagulates during the bromination.

6. A method according to Claim 5, wherein the emulsifier comprises an anionic surfactant in a proportion of 0.5 to 15% by weight based on the weight of the rubber component, and the pH of the latex is maintained at 9 or more from the beginning of the bromination to its end.

7. A method according to Claim 6, wherein the pH of the latex is maintained at 10 or more.

8. A method according to Claim 5, wherein the emulsifier comprises an anionic surfactant in a proportion of 0.5 to 15% by weight based on the weight of the rubber components, together with a nonionic surfactant in a proportion of 2 to 15% by weight based on the weight of the rubber component.

9. A method according to Claim 8, wherein the bromination is carried out at a pH of lower than 7.

10. A method according to any of Claims 5 to 9, wherein the anionic surfactant is an alkali metal salt of a higher fatty acid; rosin acid; an alkali metal salt of a disproportionated rosin acid; a tall oil soap; an alkali metal salt of a sulphonic acid or a salt of a monosulphuric ester of a higher alcohol.

11. A method according to any of Claims 5 to 9, wherein the anionic surfactant is potassium oleate, sodium oleate, sodium stearate, rosin acid, a sodium or potassium salt of disproportionated rosin acid, tall oil soap, potassium dodecylbenzenesulphonate, potassium ligninsulphonate or a sodium salt of a monosulphuric ester of oleyl alcohol.

12. A method according to Claim 11, wherein the anionic surfactant is the potassium salt of a disproportionated rosin acid.

13. A method according to Claim 8 or 9, wherein the nonionic surfactant is a polyoxyethylene cetyl ether, polyoxyethylene lauryl ether, mono-(higher fatty acid) ester of pentaerythritol, or polyoxyethylene nonylphenyl ether.

14. A method according to Claim 5, wherein the emulsifier comprises a nonionic surfactant in an amount of 2 to 15% by weight based on the weight of the rubber component.

15. A method according to Claim 14, wherein the nonionic surfactant is polyoxyethylene nonylphenyl ether or polyoxyethylene oleyl ether.

16. A method according to Claim 5, wherein the emulsifier comprises a cationic surfactant in an amount of 0.5 to 15% by weight based on the weight of the rubber component.

17. A method according to Claim 16, wherein the cationic surfactant is dodecyltrimethylammonium chloride, triethanolamine monostearate or the pyridinium salt of N-methylol oleamide.

18. A brominated rubber produced by a method according to any of Claims 6 to 17.

19. A rubber compound comprising a brominated rubber according to Claim 1, 2, 3, 4 or 18, together with sulphur and one or more other additives of the kind conventionally incorporated into rubbers.

20. A rubber composition comprising a brominated rubber according to Claim 1, 2, 3, 4 or 18, together with a natural rubber, polyisoprene rubber, polybutadiene rubber, styrene-butadiene rubber, acrylonitrile-butadiene rubber, chloroprene rubber, isobutylene-isoprene rubber, or ethylene-propylene-diene rubber.

21. A rubber composition comprising a brominated rubber according to Claim 1, 2, 3, 4 or 18, together with a natural rubber, polyisoprene rubber, polybutadiene rubber, or styrene-butadiene rubber.

**Patentansprüche**

1. Bromierter Kautschuk, der durch Bromierung eines Latex' erhalten ist, dadurch gekennzeichnet, daß der bromierte Kautschuk 3 bis 80 Gew.-% einer toluolunlöslichen Fraktion enthält und durch Bromierung eines aus 50 Gew.-% oder mehr eines $C_4$- oder $C_5$-konjugierten Diens und 50 Gew.-% oder weniger einer aromatischen Vinylverbindung zusammengesetzten elastomeren Copolymeren als wässerigen Latex, bei Aufrechterhaltung der Gleichmäßigkeit des Latex, unter Verwendung eines Emulgiermittels derart, daß nicht mehr als 25 Gew.-% des Latex' koagulieren, erhalten ist, wobei die mit dem Kautschuk verbundene Brommenge 0,5 bis 15 Gew.-% ist.

2. Bromierter Kautschuk nach Anspruch 1, dadurch gekennzeichnet, daß das elastomere Copolymer ein Copolymer von Butadien, Isopren oder 1,3-Pentadien mit Styrol ist.

3. Bromierter Kautschuk nach Anspruch 2, dadurch gekennzeichnet, daß das elastomere Copolymer ein aus 60 Gew.-% oder mehr Butadien und 40 Gew.-% oder weniger Styrol zusammengesetztes Copolymer ist.

4. Bromierter Kautschuk nach Anspruch 1, 2 oder 3, dadurch gekennzeichnet, daß der bromierte Kautschuk 1 bis 10 Gew.-% Brom enthält.

5. Verfahren zur Herstellung eines bromierten Kautschuks, das die Bromierung eines Latex' vorsieht, dadurch gekennzeichnet, daß ein wässeriger Latex eines elastomeren Copolymeren, das aus 50 Gew.-% oder mehr eines $C_4$- oder $C_5$-konjugierten Diens und 50 Gew.-% oder weniger einer aromatischen Vinylverbindung zusammengesetzt ist, bromiert wird, bis die mit dem Kautschuk verbundene Brommenge 0,5 bis 15 Gew.-% ist und der Kautschuk 3 bis 80 Gew.-% Toluolunlösliches enthält, wobei die Bromierung in der Gegenwart eines Emulgiermittels unter Aufrechterhaltung der Gleichmäßigkeit des Latex' derart durchgeführt wird, daß nicht mehr als 25 Gew.-% des Latex' während der Bromierung koagulieren.

6. Verfahren nach Anspruch 5, dadurch gekennzeichnet, daß das Emulgiermittel einen anionischen oberflächenaktiven Stoff in einem Anteil von 0,5 bis 15 Gew.-% auf Basis des Gewichts des Kautschukbestandteils aufweist und der pH-Wert des Latex' vom Beginn der Bromierung bis zu ihrem Ende auf 9 oder mehr gehalten wird.

7. Verfahren nach Anspruch 6, dadurch gekennzeichnet, daß der pH-Werk des Latex' auf 10 oder mehr gehalten wird.

8. Verfahren nach Anspruch 5, dadurch gekennzeichnet, daß das Emulgiermittel einen anionischen oberflächenaktiven Stoff in einem Anteil von 0,5 bis 15 Gew.-% auf Basis des Gewichts des Kautschukbestandteils zusammen mit einem nichtionischen oberflächenaktiven Stoff in einem Anteil von 2 bis 15 Gew.-% auf Basis des Gewichts des Kautschukbestandteils aufweist.

9. Verfahren nach Anspruch 8, dadurch gekennzeichnet, daß die Bromierung bei einem pH-Wert under 7 durchgeführt wird.

10. Verfahren nach einem der Ansprüche 5 bis 9, dadurch gekennzeichnet, daß der anionische oberflächenaktive Stoff ein Alkalimetallsalz einer höheren Fettsäure; Harzsäure; ein Alkalimetallsalz einer disproportionierten Harzsäure; Tallölseife; ein Alkalimetallsalz einer Sulfosäure oder ein Salz eines Monoschwefelsäureesters eines höheren Alkohols ist.

11. Verfahren nach einem der Ansprüche 5 bis 9, dadurch gekennzeichnet, daß der anionische oberflächenaktive Stoff Kaliumoleat, Natriumoleat, Natriumstearat, Harzsäure, ein Natrium- oder Kaliumsalz disproportionierter Harzsäure, Tallölseife, Kaliumdodecylbenzolsulfonat, Kaliumligninsulfonat oder ein Natriumsalz eines Monoschwefelsäureesters von Oleylalkohol ist.

12. Verfahren nach Anspruch 11, dadurch gekennzeichnet, daß der anionische oberflächenaktive Stoff das Kaliumsalz einer disproportionierten harzsäure ist.

13. Verfahren nach Anspruch 8 oder 9, dadurch gekennzeichnet, daß der nichtionische oberflächenaktive Stoff ein Polyoxyäthylencetyläther, Polyoxyäthylenlauryläther, Mono- (höhere Fettsäure)-ester von Pentaerythritol oder Polyoxyäthylennonylphenyläther ist.

14. Verfahren nach Anspruch 5, dadurch gekennzeichnet, daß das Emulgiermittel einen nichtionischen oberflächenaktiven Stoff in einer Menge von 2 bis 15 Gew.-% auf Basis des Gewichts des Kautschukbestandteils aufweist.

15. Verfahren nach Anspruch 14, dadurch gekennzeichnet, daß der nichtionische oberflächenaktive Stoff Polyoxyäthylennonylphenyläthe oder Polyoxyäthylenoleyläther ist.

16. Verfahren nach Anspruch 5, dadurch gekennzeichnet, daß das Emulgiermittel einen kationischen oberflächenaktiven Stoff in einer Menge von 0,5 bis 15 Gew.-% auf Basis des Gewichts des Kautschukbestandteils aufweist.

17. Verfahren nach Anspruch 16, dadurch gekennzeichnet, daß der kationische oberflächenaktive Stoff Dodecyltrimethylammoniumchlorid, Triäthylaminmonostearat oder das Pyridinsalz von N-methylololeamid ist.

18. Bromierter Kautschuk, hergestellt durch ein Verfahren gemäß einem der Ansprüche 6 bis 17.

19. Kautschukmischung, die einen bromierten Kautschuk nach Anspruch 1, 2, 3, 4 oder 18 zusammen mit Schwefel und einem oder mehreren anderen Zusätzen der herkömmlich in Kautschuke-eingebrachten Art aufweist.

20. Kautschukzusammensetzung, die einen bromierten Kautschuk nach Anspruch 1, 2, 3, 4 oder 18 zusammen mit einem Naturkautschuk, Polyisoprenkautschuk, Polybutadienkautschuk, Styrol-Butadien-Kautschuk, Acrylnitril-Butadien-Kautschuk, Chloroprenkautschuk, Isobutylen-Isopren-Kautschuk oder Äthylen-Propylen-Dien-Kautschuk aufweist.

21. Kautschukzusammensetzung, die einen bromierten Kautschuk nach Anspruch 1, 2, 3, 4 oder 18 zusammen mit einem Naturkautschuk, Polyisoprenkautschuk, Polybutadienkautschuk oder Styrol-Butadien-Kautschuk aufweist.

**Revendications**

1. Un caoutchouc bromé obtenu par bromation d'un latex, caractérisé en ce que le caoutchouc bromé contient de 3 à 80% en poids d'un fraction insoluble dans le toluène et est obtenu par bromation sous forme d'un latex aqueux d'un copolymère élastomère composé de 50% en poids ou plus d'un diène conjugué en $C_4$ ou $C_5$ et de 50% en poids ou moins d'un composé vinylique aromatique, tout en maintenant l'uniformité du latex en utilisant un émulsifiant tel que pas plus de 25% en poids du

latex coagule, la quantité de brome combiné avec le caoutchouc étant de 0,5 à 15% en poids.
que pas plus de 25% en poids du latex coagule, la quantité de brome combiné avec le caoutchouc étant de 0,5 à 15% en poids.

2. Un caoutchouc bromé selon la revendication 1, dans lequel le copolymère élastomère est un copolymère de butadiène, d'isoprène ou de 1,3-pentadiène avec du styrène.

3. Un caoutchouc bromé selon la revendication 2, dans lequel le copolymère élastomère est un copolymère composé de 60% en poids ou plus de butadiène et de 40% en poids ou moins de styrène.

4. Un caoutchouc bromé selon la revendication 1, 2 ou 3, dans lequel le caoutchouc bromé contient de 1 à 10% en poids de brome.

5. Un procédé de préparation d'un caoutchouc bromé comprenant la bromation d'un latex, caractérisé en ce qu'un latex aqueux d'un copolymère élastomère composé de 50% en poids ou plus d'un diène conjugué en $C_4$ ou $C_5$ et de 50% en poids ou moins d'un composé vinylique aromatique est bromé jusqu'à ce que la quantité de brome combiné avec le caoutchouc soit de 0,5 à 15% en poids, et que le caoutchouc contienne de 3 à 80% en poids d'insolubles dans le toluène, la bromation étant effectuée en présence d'un émulsifiant maintenant l'uniformité du latex de manière que pas plus de 25% en poids du latex coagule pendant la bromation.
bromation.

6. Un procédé selon la revendication 5, dans lequel l'émulsifiant comprend un surfactif anionique en une proportion de 0,5 à 15% en poids sur la base du poids du composant caoutchouc, et le pH du latex est maintenu à 9 ou plus depuis le début de la bromation jusqu'à sa fin.

7. Un procédé selon la revendication 6, dans lequel le pH du latex est maintenu à 10 ou plus.

8. Un procédé selon la revendication 5, dans lequel l'émulsifiant comprend un surfactif anionique en une proportion de 0,5 à 15% en poids sur la base du poids du composant caoutchouc, ainsi qu'un surfactif non ionique en une proportion de 2 à 15% en poids sur la base du poids du composant caoutchouc.

9. Un procédé selon la revendication 8, dans lequel la bromation est effectuée à un pH inférieur à 7.

10. Un procédé selon l'une quelconque des revendications 5 à 9, dans lequel le surfactif anionique est un sel de métal alcalin d'un acide gras supérieur; un acide de colophane; un sel de métal alcalin d'un acide de colophane dismuté; un savon de tall oil; un sel de métal alcalin d'un acide sulfonique ou un sel d'un ester monosulfurique d'un alcool supérieur.

11. Un procédé selon l'une quelconque des revendications 5 à 9, dans lequel le surfactif anionique est l'oléate de potassium, l'oléate de sodium, le stéarate de sodium, un acide de colophane, un sel de sodium ou de potassium d'un acide de colophane dismuté, un savon de tall oil, le dodécylbenzène-sulfonate de potassium, le ligninesulfonate de potassium ou un sel de sodium d'un ester monosulfurique d'alcool oléylique.

12. Un procédé selon la revendication 11, dans lequel le surfactif anionique est le sel de potassium d'un acide de colophane dismuté.

13. Un procédé selon la revendication 8 ou 9, dans lequel le surfactif non ionique est un éther cétylique polyoxyéthyléné, un éther laurylique polyoxyéthyléné, un monoester d'acide gras supérieur de pentaérylthritol, ou un éther nonylphénylique polyoxyéthyléné.

14. Un procédé selon la revendication 5, dans lequel l'émulsifiant comprend un surfactif non ionique en une quantité de 2 à 15% en poids sur la base du poids du composant caoutchouc.

15. Un procédé selon la revendication 14, dans lequel le surfactif non ionique est un éther nonyl-phénylique polyoxyéthyléné ou un éther oléylique polyoxyéthyléné.

16. Un procédé selon la revendication 5, dans lequel l'emulsifiant comprend un surfactif cationique en une quantité de 0,5 à 15% en poids sur la base du poids du composant caoutchouc.

17. Un procédé selon la revendication 16, dans lequel le surfactif cationique est le chlorure de dodécyltriméthylammonium, le monostéarate de triéthanolamine ou le sel de pyridinium de N-méthylol-oléamide.

18. Un caoutchouc bromé produit par un procédé selon l'une quelconque des revendications 6 à 17.

19. Un mélange de caoutchouc comprenant un caoutchouc bromé selon la revendication 1, 2, 3, 4 ou 18, ainsi que du soufre et un ou plusieurs autres additifs du type couramment incorporé dans les caoutchoucs.

20. Une composition de caoutchouc comprenant un caoutchouc bromé selon la revendication 1, 2, 3, 4 ou 18, ainsi qu'un caoutchouc naturel, un caoutchouc de polyisoprène, un caoutchouc de polybutadiène, un caoutchouc de styrène-butadiène, un caoutchouc d'acrylonitrile-butadiène, ou caoutchouc de chloroprène, un caoutchouc d'isobutylène-isoprène, ou un caoutchouc d'éthylène-propylène-diène.

21. Une composition de caoutchouc comprenant un caoutchouc bromé selon la revendication 1, 2, 3, 4 ou 18, ainsi qu'un caoutchouc naturel, un caoutchouc de polyisoprène, un caoutchouc de poly-butadiène, ou un caoutchouc de styrène-butadiène.